# FASCICULE DE BREVET EUROPEEN

(11) **EP 0 394 876 B1**
(45) Date de publication et mention de la délivrance du brevet: **21.07.1993**
(21) Numéro de dépôt: 90107567.1
(22) Date de dépôt: 20.04.1990
(51) Int. Cl.: A47J 37/08

(54) **Grille-pain**
Brotröster
Toaster

(30) Priorité: 28.04.1989 FR 8905746
(43) Date de publication de la demande: 31.10.1990
(73) Titulaire: MOULINEX, F-93171 Bagnolet (FR)
(72) Inventeur: Basora, San Juan, Antonio, E-Barcelona 21 (ES)
(74) Mandataire: May, Hans Ulrich, Dr.

(56) Documents cités:
- DE-A- 3 045 598
- FR-A- 948 281
- FR-A- 2 371 174
- GB-A- 2 133 281
- US-A- 2 849 946

## Description

La présente invention se rapporte à un grille-pain comportant un boîtier présentant une ouverture supérieure et à l'intérieur duquel sont disposées au moins une résistance chauffante, deux grilles de serrage d'une tranche de pain à griller, maintenues en position de repos écartées l'une de l'autre par des moyens élastiques et susceptibles de basculer chacune autour d'un axe horizontal inférieur, et un chariot porte-pain monté mobile verticalement entre les deux grilles et pouvant occuper deux positions, une position haute pour laquelle le chariot est situé dans la partie supérieure du boîtier, et une position de grillage pour laquelle le chariot est descendu au fond du boîtier et coopère avec les grilles pour les faire basculer l'une vers l'autre, afin de maintenir le pain serré.

L'invention concerne, plus particulièrement, un grille pain dans lequel, chaque grille présente dans sa partie inférieure un bras dirigé vers l'autre grille, les deux extrémités de ces bras étant destinées à se croiser en position de repos des grilles, de manière que, lorsque le chariot vient en sa position de grillage, une partie inférieure du chariot vient prendre appui sur lesdites extrémités au niveau de la région de leur croisement, exerçant ainsi une force centrée et opposée à celle exercée par les moyens élastiques, de façon à provoquer le basculement des grilles l'une vers l'autre.

Un tel grille-pain décrit dans le préambule de la revendication de la présente demande est déjà connu par le document FR - A - 2371174. Dans un grille-pain de ce type on a recours à des dispositifs mécaniques plus ou moins fiables pour assurer la coopération entre le chariot et les grilles, par exemple plusieurs ressorts de forme plus ou moins complexes. Ces dispositif, du fait du manque de rigidité, présentent l'inconvénient, soit de ne pas centrer correctement la tranche de pain par rapport à la source de chaleur, soit de ne pas compenser l'épaisseur du pain, soit en cas de non basculement d'une grille à la descente du chariot, de ne serrer le pain que d'un côté. Ces inconvénients ont pour résultat d'obtenir une tranche plus grillée d'un côté que de l'autre, voire brûlée.

On connaît également le document DE - A - 3.045.598 qui décrit un grille-pain dans lequel les grilles sont montées basculantes l'une vers l'autre au moyen de bras rigides sur lesquels vient agir le chariot. Malheureusement, ce dispositif ne garantit pas l'ouverture automatique et rapide des grilles lors de la remontée du chariot.

L'invention a pour but de remédier à ces inconvénients en réalisant un grille-pain tel que le mécanisme de coopération entre le chariot et les grilles soit d'une réalisation particulièrement simple, économique et fiable.

Selon l'invention les bras sont rigides et les moyens élastiques sont constitués par un ressort interposé entre le fond du boîtier et la région de croisement des extrémités des bras de manière à exercer une force vers le haut.

L'invention a donc pour avantage d'apporter un dispositif permettant de centrer automatiquement le pain entre les grilles du fait de leur basculement symétrique, quelle que soit l'épaisseur du pain et de repousser vers le haut les extrémités des bras pour garantir le maintien des grilles en position de repos.

Les caractéristiques et avantages de l'invention ressortiront d'ailleurs de la description qui va suivre, à titre d'exemple, en référence au dessin annexé dans lequel :

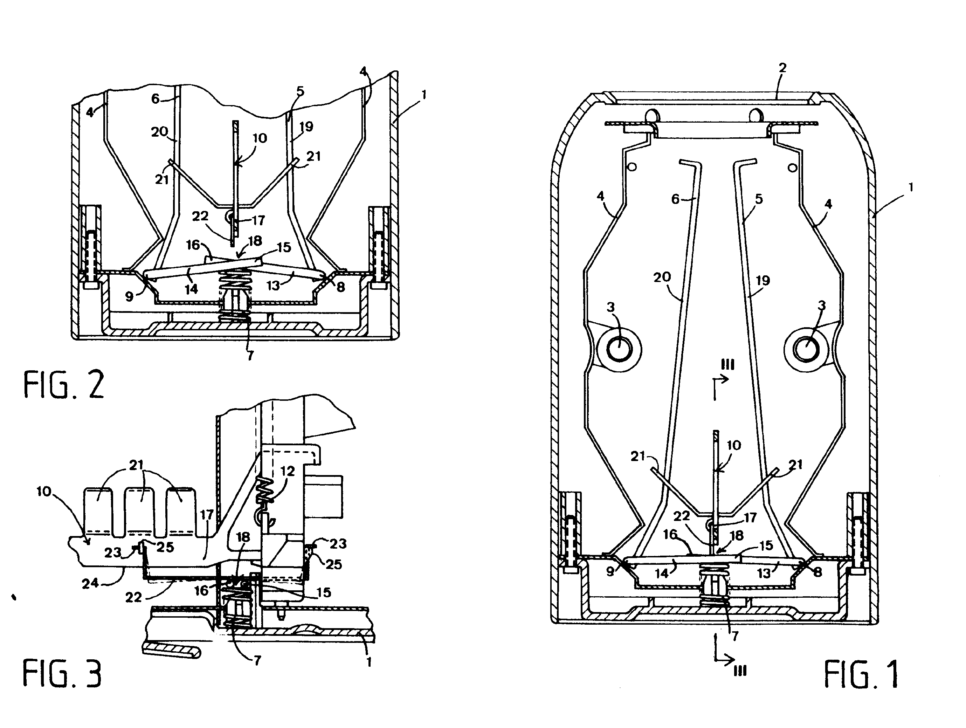

la figure 1 est une vue en coupe verticale du grille-pain selon l'invention illustrant la position de grillage ; la figure 2 est une vue en coupe verticale partielle du grille-pain selon l'invention illustrant les grilles en position de repos ; la figure 3 est une vue en coupe transversale partielle selon la ligne III-III de la figure 1.

Le grille-pain représenté sur les figures 1 et 2 comporte un boîtier 1 présentant une ouverture supérieure 2 de passage des tranches de pain et à l'intérieur duquel sont disposées deux résistances chauffantes 3, des réflecteurs de chaleur 4, deux grilles 5,6 de serrage d'une tranche de pain à griller, maintenues en position de repos (figure 2) écartées l'une de l'autre par des moyens élastiques 7 constitués par un ressort à boudin et susceptibles de basculer chacune autour d'un axe horizontal inférieur 8,9 dit axe de basculement (figure 1). La grille comporte en outre un chariot 10 porte-pain monté mobile verticalement entre les deux grilles 5, 6. Le chariot 10 peut occuper deux positions, une position haute (non représentée) pour laquelle le chariot 10 est situé dans la partie supérieure du boîtier 1, et une position de grillage (figures 1) pour laquelle le chariot 10 est descendu au fond du boîtier 1 et coopère avec les grilles 5, 6 pour les faire basculer l'une vers l'autre, afin de maintenir le pain serré.

Le chariot 10 est amené de sa position haute à sa position de grillage par l'utilisateur. En position de grillage, il est retenu par un mécanisme de verrouillage (non représenté) comportant un dispositif de temporisation qui commande les résistances chauffantes 3. A la fin du temps de grillage, le dispositif de temporisation coupe les résistances 3 et déverrouille le chariot 10, qui est ramené en position haute par un ressort de rappel 12 (la figure 2 représente le chariot 10 en position intermédiaire aux deux positions).

Selon l'invention, chaque grille 5 ou 6 présente dans sa partie inférieure un bras 13, 14 rigide dirigé vers l'autre grille 5 ou 6, les deux extrémités 15, 16 de ces bras 13, 14 étant destinées à se croiser en position de repos des grilles 5, 6, de manière que, lorsque le chariot 10 vient en sa position de grillage, une partie inférieure du chariot 10 vient prendre appui sur lesdites extrémités 15,16 au niveau de la région 18 de leur croisement, exerçant ainsi une force centrée et opposée à celle exercée par le ressort 7, de façon à provoquer le basculement des grilles 5, 6 l'une vers l'autre par effet de levier.

Le ressort 7 est interposé entre le fond du boîtier 1 et la région 18 de croisement des extrémités 15, 16 des bras 13, 14 de manière à exercer une force vers le haut. Ainsi, la spire inférieure du ressort 7 repose au fond du boîtier 1, tandis que la spire supérieure vient pousser directement les extrémités 15, 16 des bras 13, 14 dans la région 18 de leur croisement. La région 18 de croisement est située à un niveau supérieur par rapport aux axes 8, 9 de basculement, pour des raisons de place dans le fond du boîtier 1.

Grâce à cette disposition, les grilles 5, 6 étant symétriques, le pain est automatiquement centré car la force exercée par le chariot 10 se répartit également sur les deux bras 13, 14 et donc les grilles 5, 6 basculent symétriquement l'une vers l'autre. Afin d'obtenir un bon effet de levier, chaque bras 13,14 est relié à la grille 5, 6 au niveau de l'axe horizontal 8, 9 de basculement. Pour réaliser une construction particulièrement simple, le bras 13, 14 et l'axe 8, 9 de chaque grille 5, 6, sont formés d'une seule pièce par un fil coudé, et des barreaux verticaux 19, 20 sont soudés sur chaque axe 8, 9. Les deux grilles sont agencés symétriquement par rapport au plan vertical de déplacement du chariot 10. Chaque grille 5, 6 est reliée au boîtier 1 uniquement au niveau de son axe 8, 9 de basculement. Ainsi, la partie supérieure de chaque grille 5, 6 n'est pas guidée sur le boîtier 1, mais bascule librement autour de l'axe 8, 9.

Telle que représentée sur la figure 3, la partie supérieure du chariot 10 comporte une série d'ailes évasées 21 destinées à recevoir la tranche de pain tandis que la partie inférieure du chariot 10 est constituée par une traverse 17 horizontale disposée dans un plan vertical, et prend appui sur les extrémités 15, 16 des bras 13, 14 au moyen d'un dispositif élastique 22 constitué par un fil métallique du type corde à piano conformé en U, dont les deux extrémités 23 sont fixées à la traverse 17 et dont la partie médiane est tendue et disposée parallèlement au bord inférieur 24 de la traverse 17 et à distance de celui-ci. Le fil métallique 22 est, de plus, monté de façon amovible par accrochage de ses extrémités 23 dans des oeillets 25 de la traverse 17, de manière que son remplacement éventuel soit rapide et aisé.

Le dispositif élastique 22 a pour but de compenser élastiquement l'épaisseur de la tranche de pain. En effet, lorsque le chariot 10 descend et vient prendre appui sur les extrémités 15, 16 des bras 13, 14, il exerce une force dirigée vers le bas, opposée à celle du ressort à boudin 7 jusqu'à ce que le chariot 10 soit bloqué par le mécanisme de verrouillage. Or, si le pain est très épais, il empêche les grilles 5, 6 de basculer complètement, ajoutant une force supplémentaire dirigée vers le haut au niveau du croisement 18 des bras 13, 14, empêchant ainsi le chariot 10 de descendre complètement et d'être bloqué par le mécanisme de verrouillage. Pour éviter cela, la partie médiane du fil 22 se déforme verticalement en arc de cercle (représenté en traits interrompus sur la figure 3), d'autant plus que la tranche est épaisse, permettant au chariot 10 de descendre complètement tout en ajustant le serrage des grilles 5, 6 à l'épaisseur du pain.

La partie médiane du fil peut aussi légèrement se déformer latéralement au cas où le basculement de l'une des grilles 5, 6 serait empêché. En effet, lorsque le chariot 10 descend vers sa position de grillage et prend appui sur les extrémités 15, 16 des bras 13, 14, si l'une des grilles 5, 6 est bloquée en position de repos, le bras 13, 14 correspondant reste incliné et vient gêner la descente du chariot 10 qui ne peut s'effectuer que dans un plan vertical, empêchant ainsi son verrouillage en position de grillage. Grâce à la déformation latérale du fil 22, le chariot 10 peut continuer sa descente jusqu'au verrouillage.

## Revendications

1. Grille-pain comportant un boîtier (1) présentant une ouverture supérieure (2) et à l'intérieur duquel sont disposés au moins une résistance chauffante (3), deux grilles (5,6) de serrage d'une tranche de pain à griller, maintenues en position de repos écartées l'une de l'autre par des moyens élastiques (7) et susceptibles de basculer chacune autour d'un axe horizontal inférieur (8,9), et un chariot (10) porte-pain monté mobile verticalement entre les deux grilles (5,6) et pouvant occuper deux positions, une position haute pour laquelle le chariot (10) est situé dans la partie supérieure du boîtier (1), et une position de grillage pour laquelle le chariot (10) est descendu au fond (11) du boîtier (1) et coopère avec les grilles (5,6) pour les faire basculer l'une vers l'autre, afin de maintenir le pain serré, chaque grille (5 ou 6) présentant dans sa partie inférieure un bras (13,14) dirigé vers l'autre grille (5 ou 6), les deux extrémités (15,16) de ces bras (13,14) étant destinées à se croiser en position de repos des grilles(5,6), de manière que, lorsque le chariot (10) vient en sa position de grillage, une partie inférieure du chariot (10) vient prendre appui sur lesdites extrémités (15,16) au niveau de la région (18) de leur croisement, exerçant'ainsi une force centrée et opposée à celle exercée par les moyens élastiques (7), de façon à provoquer le basculement des grilles (5,6) l'une vers l'autre,
**caractérisé en ce que** les bras sont rigides et les moyens élastiques (7) sont constitués par un ressort interposé entre le fond du boîtier (1) et la région (18) de croisement des extrémités (15,16) des bras (13,14) de manière à exercer une force vers le haut.

2. Grille-pain selon la revendication 1,
**caractérisé en ce que** la partie inférieure du chariot (10) prend appui sur les extrémités (15,16) des bras (13,14) au moyen d'un dispositif élastique (22).

3. Grille-pain selon la revendication 2,
**caractérisé en ce que** la partie inférieure du chariot (10) étant constituée par une traverse (17) horizontale disposée dans un plan vertical, le dispositif élastique (22) est constitué par un fil métallique dont les deux extrémités (23) sont fixées à la traverse (17) et dont la partie médiane est tendue et disposée parallèlement au bord inférieur (24) de la traverse (17) et à distance de celui-ci.

## Patentansprüche

1. Brotröster mit einem Gehäuse (1) mit einer oberen Öffnung (2) in dessen Inneren mindestens ein Heizwiderstand (3), zwei Gitter (5,6) zum Einspannen einer zu röstenden Brotscheibe, die durch eine elastische Vorrichtung (7) in der Ruhestellung voneinander entfernt gehalten und jedes um eine untere horizontale Achse (8,9) schwenkbar sind, und ein zwischen den zwei Gittern (5,6) vertikal beweglicher Brothaltewagen (10) angeordnet sind, der zwei Stellungen einnehmen kann, eine Hochstellung, in welcher der Wagen ( 10) sich im oberen Teil. des Gehäuses (1) befindet, und eine Röststellung, in welcher der Wagen (10) zum Boden (11) des Gehäuses (1) abgesenkt ist und mit den Gittern (5,6) zusammenwirkt, um sie in Richtung aufeinander zu schwenken und so die Brotscheibe eingespannt zu halten, wobei jedes Gitter (5 oder 6) in seinem unteren Teil einen zum anderen Gitter (5 oder 6) gerichteten Arm (13,14) aufweist und die zwei Enden (15,16) dieser Arme (13,14) dazu bestimmt sind, sich in der Ruhestellung der Gitter (5,6) zu kreuzen, sodaß wenn der Wagen (10) in seine Röststellung gelangt, ein unterer Teil des Wagens(10) die Enden (15,16) auf dem Niveau des Bereichs (18) ihrer Kreuzung beaufschlagt und so eine zentrierte Kraft ausübt, welche entgegengesetzt der von der elastischen Vorrichtung ausgeübten Kraft ist, um das Schwenken der Gitter (5,6) in Richtung aufeinander zu bewirken, **dadurch gekennzeichnet, daß** die Arme steif sind und die elastische Vorrichtung (7) aus einer Feder besteht, die zwischen dem Boden des Gehäuses (1) und dem Kreuzungsbereich (18) der Enden (15,16) der Arme (13,14) so eingesetzt ist, daß sie eine nach oben gerichtetete Kraft ausübt.

2. Brotröster nach Anspruch 1, dadurch gekennzeichnet, daß der untere Teil des Wagens (10) mittels einer elastischen Vorrichtung (22) auf die Enden (15,16) der Arme (13,14) drückt.

3. Brotröster nach Anspruch 2, dadurch gekennzeichnet, daß der untere Teil des Wagens (10) aus einer in einer senkrechten Ebene angeordneten horizontalen Traverse (17) besteht und die elastische Vorrichtung (22) aus einem Metalldraht besteht,dessen zwei Enden (23) an der Traverse (17) befestigt sind und dessen Mittelabschnitt gespannt und parallel zur Unterkante (24) der Traverse (17) und in einem Abstand von dieser angeordnet ist.

## Claims

1. A toaster comprising a housing (1) having an upper aperture (2) and inside which are disposed at least one heating resistor (3), two grills (5, 6), which tightly hold a slice of bread to be toasted and are retained in the inoperative position and kept apart by elastic means (7), and each of which is able to swivel around a lower horizontal axis (8, 9), and a bread carriage (10) mounted so that it can move vertically between the two grills (5, 6) and can occupy two positions, a high position, for which the carriage (10) is situated in the upper part of the housing (1), and a toasting position, for which the carriage (10) is lowered to the bottom (11) of the housing (1) and cooperates with the grills (5, 6) to make them tilt towards one another, so as to keep the bread tightly held, each grill (5 or 6) having in its lower part an arm (13, 14) directed towards the other grill (5 or 6), the two ends (15, 16) of these arms (13, 14) being intended to cross in the inoperative position of the grills (5, 6), so that, when the carriage (10) comes into its toasting position, a lower part of the carriage (10) comes to rest on said ends (15, 16) at the level of the region (18) of their intersection, thus exerting a centred force opposite to that exerted by the elastic means (7), so as to bring about the tilting of the grills (5, 6) towards one another,
**characterised in that** the arms are rigid and the elastic means (7) are formed by a spring positioned between the bottom of the housing (1) and the region (18) of intersection of the ends (15, 16) of the arms (13, 14) so as to exert an upward force.

2. A toaster according to Claim 1,
**characterised in that** the lower part of the carriage (10) rests on the ends (15, 16) of the arms (13, 14) by means of an elastic device (22).

3. A toaster according to Claim 2,
**characterised in that,** the lower part of the carriage (10) being formed by a horizontal crossbar (17) disposed in a vertical plane, the elastic device (22) is formed by a metal wire, the two ends (23) of which are fixed to the crossbar (17) and the central part of which is held and disposed parallel to the lower edge (24) of the crossbar (17) and at a distance therefrom.
